# EUROPEAN PATENT APPLICATION

(11) **EP 2 682 760 A1**
(43) Date of publication of application: **08.01.2014**
(21) Application number: 12176325.4
(22) Date of filing: 13.07.2012
(51) Int. Cl.: G01Q 30/12, G01Q 30/16, B82Y 35/00

(54) **Apparatus and method for atomic force microscopy in controlled atmosphere**

(30) Priority: 05.07.2012 US 201261668333 P
(71) Applicant: IMEC, 3001 Leuven (BE)
(72) Inventor: Paredis, Kristof, 3001 Leuven (BE); Vandervorst, Wilfried, 3001 Leuven (BE)
(74) Representative: Clerix, André

(57) **Abstract**

An apparatus for performing atomic force microscopy is disclosed. The apparatus comprises an AFM measurement unit configured to operate in a first controlled atmosphere and a pretreatment unit configured to operate in a second controlled atmosphere, the second controlled atmosphere being different from the first controlled atmosphere. The pretreatment unit is connected to the AFM measurement unit. The second controlled atmosphere is a vacuum atmosphere, whereas the first controlled atmosphere consists of at least an inert gas.

## Description

### Field

The disclosed technology is related to an apparatus and a method for performing atomic force microscopy, more specifically for performing electrical characterization using atomic for microscopy.

### State-of-the-art

Atomic force microscopy (AFM) is a type of scanning probe microscopy (SPM) that provides high resolution, three-dimensional (3D) imaging by scanning a sharp tip, typically positioned at the end of a cantilever, across the surface of a sample. The whole of the tip and cantilever is commonly referred to as a probe. By using a laser light which is focused on the back of the cantilever during scanning and by detecting the reflected light by a photodiode, it is possible to image the 3D topography profile of the sample. Additionally also electrical properties of the sample may be measured by applying a voltage between the sample and a conductive tip.

Many different electrical AFM measurement techniques are available, such as scanning spreading resistance microscopy (SSRM). In SSRM a bias voltage is applied between a conductive tip and the sample and a resistance profile of the sample is measured (in combination with a topography profile). The resistance profile is then linked to the carrier distribution (doping profile) of the sample.

It is an advantage of these techniques that sub nanometer spatial resolution may be achieved with a low signal to noise ratio.

For SSRM in air a high force is necessary between the tip and the sample to induce the so-called beta-thin phase which is crucial for obtaining a good electrical contact with the sample. A disadvantage related to this high force is damaging of the sample surface while scanning.

In J. Vac. Sci. Technol. B, Vol. 28, No. 2, Mar/Apr 2010, P. Eyben et al. present the analysis and model of using high vacuum (HV) SSRM instead of SSRM in (atmospheric) air. It is shown that a better performance is achieved for HV SSRM, more specifically a better signal to noise ratio, an improved spatial resolution and a reduced measurement force (compared to the signal to noise ratio, the spatial resolution and measurement force achieved with SSRM in air).

A reason for this improvement is linked to the quality of the sample surface and tip surface. The presence of different kinds of contaminants such as for example organic contaminants, the presence of hydrogen, the presence of hydrocarbons and/or the presence of a (native) oxide at the sample or tip surface may be detrimental for the performance of the AFM measurement when performed in (ambient) air. By measuring under high vacuum the presence and thus the influence of these contaminants is drastically reduced.

Such an AFM measurement system under high vacuum is however expensive as the complete measurement tool must be located in and adapted to an environment which can be put under vacuum. The use of this environment also significantly reduces the usability of the equipment since the system has to be kept under vacuum during the whole measurement procedure resulting in a more complex and difficult handling of the tool, sample and probe. More specifically, it is not possible to manually handle the sample, probe and tool as easily as compared to a regular AFM measurement system in air.

There is a need to overcome these disadvantages.

### Summary of the invention

According to a first aspect of the present invention, an apparatus for performing atomic force microscopy is disclosed, the apparatus comprising an AFM measurement unit operating in a first controlled atmosphere; a pretreatment unit operating in a second controlled atmosphere being different from the first controlled atmosphere, the pretreatment unit being connected to the AFM measurement unit.

According to embodiments the second controlled atmosphere has a pressure lower than the pressure of the first controlled atmosphere.

According to embodiments of the invention the first controlled atmosphere consists of at least one inert gas. The inert gas is selected from nitrogen, argon and helium or a mixture thereof.

According to embodiments of the invention the second controlled atmosphere is a vacuum atmosphere. The vacuum atmosphere has a pressure lower than about 1 mbar, more preferably lower than about 10⁻³ mbar, even more preferably lower than about 10⁻⁹ mbar.

According to embodiments the pretreatment unit is located within the AFM measurement unit.

According to embodiments the AFM measurement unit comprises AFM measurement equipment, more preferably AFM measurement equipment for performing electrical measurements. An example of AFM measurement equipment for performing electrical measurements is scanning spreading resistance microscopy (SSRM).

According to embodiments the pretreatment unit comprises a holder for holding a sample and/or AFM probe.

According to embodiments the pretreatment unit further comprises a heating system. The heating system may be a heating stage or an irradiation system.

A second aspect of the invention discloses a method for performing an AFM measurement of a sample with an AFM probe, the method comprising performing the AFM measurement of the sample with the AFM probe in an AFM measurement unit operating under a first controlled atmosphere, wherein prior to the AFM measurement:
(i) the sample and/or the AFM probe is treated in a pretreatment unit , the pretreatment unit operating under a second controlled atmosphere during the treatment step, the second controlled atmosphere being different from the first controlled atmosphere; and
(ii) the treated sample and/or AFM probe is transferred from the pretreatment unit to the AFM measurement unit.

According to embodiments the second controlled atmosphere has a lower pressure than the first controlled atmosphere.

According to embodiments the second controlled atmosphere is a vacuum atmosphere and the treatment in the pretreatment unit comprises introducing the sample and/or AFM probe in the pretreatment unit, thereafter depressurizing the pretreatment unit, with the sample and/or probe therein, to a predetermined vacuum pressure and maintaining the sample at the predetermined vacuum pressure for a predetermined time.

According to embodiments the method further comprising after the step of maintaining the sample at the predetermined vacuum pressure, pressurizing the pretreatment unit with a contaminant-free gas to another atmosphere. The another atmosphere may be identical to the first controlled atmosphere. The contaminant-free gas may be an inert gas such as for example nitrogen, argon, helium or a mixture thereof.

According to embodiments the treatment in the pretreatment unit further comprises heating the sample and/or AFM probe to a predetermined temperature after introducing the sample and/or AFM probe in the pretreatment unit and before, during or after the depressurizing step.

According to embodiments after performing the AFM measurement of the sample with the AFM probe, the sample and/or AFM probe is transferred from the AFM measurement unit to the pretreatment unit; and steps (i) to (ii) are repeated.

According to embodiments the step of transferring the sample and/or AFM probe from the pretreatment unit to the AFM measurement unit comprises transferring the sample and/or AFM probe from the holder system in the pretreatment unit to AFM measurement equipment in the AFM measurement unit.

It is an advantage of at least some embodiments that a better performance of the atomic force microscopy measurement may be achieved without the necessity of performing the atomic force microscopy measurement under vacuum.

It is an advantage of at least some embodiments that a low-cost atomic force microscopy measurement apparatus may be employed as only the vacuum environment is necessary for the pretreatment (unit) of the sample (and not the complete apparatus must be under this vacuum).

It is an advantage of at least some embodiments that an easy-to-handle atomic force microscopy measurement apparatus may be employed as the sample remains easily handled in the measurement unit (for example by using a glove box).

At least some embodiments of the present invention have the advantage that additional pretreatment processing (such as heating the sample and/or AFM probe) may be done in a separate controlled environment (for instance vacuum) while the AFM measurement can still be performed without the necessity of measuring under vacuum conditions and with a higher quality measurement as compared to AFM measurements performed in regular air.

It is an advantage that improved sub nanometer spatial resolution, better signal-to-noise ratio and reduced measurement force may be achieved by using the apparatus or method according to some embodiments compared to using an AFM in (ambient) air. This is an advantage for topographical measurements, but also for electrical measurements such as scanning spreading resistance microscopy (SSRM).

It is an advantage that a sample may be pretreated and measured in a stable environment.

### Brief description of the drawings

All drawings and figures are intended to illustrate some aspects and embodiments of the present invention. The drawings described are only schematic and are non-limiting. In the drawings, the size of some of the elements may be exaggerated and not drawn on scale for illustrative purposes.

Exemplary embodiments are illustrated in referenced figures of the drawings. It is intended that the embodiments and figures disclosed herein be considered illustrative rather than restrictive. In the different figures, the same reference signs refer to the same or analogous elements.

Figure 1 shows a schematic presentation of an apparatus according to certain inventive embodiments. A pretreatment unit is located aside and connected with an AFM measurement unit. Dotted boxes represent optional parts of the apparatus.

Figure 2 shows a schematic presentation of apparatus according to certain inventive embodiments. A pretreatment unit is located inside and connected with an AFM measurement unit. Dotted boxes represent optional parts of the apparatus.

Figure 3 shows experimental data of a proof-of-concept measurement. The deviation (%) in the measurement results on samples with and without treatment is shown in function of time.

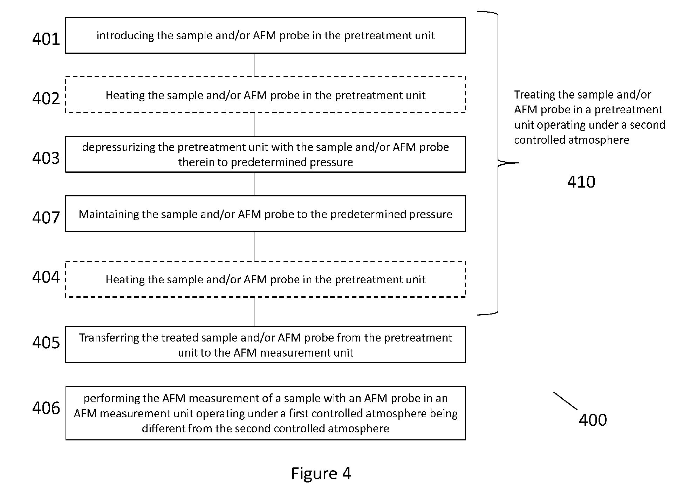

Figure 4 shows a flow chart for a method for performing an atomic force microscopy (AFM) measurement of a sample with an AFM probe according to certain inventive embodiments. The dotted boxes show optional steps for the method.

### Detailed description

The foregoing description details certain embodiments. It will be appreciated, however, that no matter how detailed the foregoing appears in text, the invention may be practiced in many ways. It should be noted that the use of particular terminology when describing certain features or aspects of the invention should not be taken to imply that the terminology is being re-defined herein to be restricted to including any specific characteristics of the features or aspects of the invention with which that terminology is associated.

While the above detailed description has shown, described, and pointed out novel features of the invention as applied to various embodiments, it will be understood that various omissions, substitutions, and changes in the form and details of the device or process illustrated may be made by those skilled in the technology without departing from the spirit of the invention.

It is to be noticed that the term "comprising" should not be interpreted as being restricted to the means listed thereafter; it does not exclude other elements or processes. Thus, the scope of the expression "a device comprising means A and B" should not be limited to devices consisting only of components A and B. It means that with respect to the present description, the only relevant components of the device are A and B.

In a first aspect an apparatus 100 for performing atomic force microscopy is disclosed. The apparatus 100 comprises an AFM measurement unit 102 configured to operate in a first controlled atmosphere 300 and a pretreatment unit 101 configured to operate in a second controlled atmosphere 400, the second controlled atmosphere 400 being different from the first controlled atmosphere 300. The pretreatment unit 101 is connected 110, 111 to the AFM measurement unit 102.

The AFM measurement unit 102 comprises AFM measurement equipment 106 and may further comprise additional (optional) equipment 107. With AFM measurement equipment 106 is meant the measurement tool used for analyzing a sample by moving a probe (i.e. cantilever with tip) across the sample and monitoring the vertical displacement of the probe when moving the probe across the sample by a detection system. The sample is typically mounted on an AFM sample holder or AFM sample stage which is part of the AFM measurement equipment 106. The probe is typically mounted on an AFM probe holder, which is part of the AFM measurement equipment 106. The additional (optional) equipment may for example be a cleaving tool, an optical microscope, a heating plate.

The AFM measurement unit 102 and thus the AFM measurement equipment 106 and any optional equipment 107 is configured to operate in a first controlled atmosphere 300. This means the AFM measurement unit 102, comprising the AFM equipment 106, when in use, is operating in a first controlled atmosphere 300.

The pretreatment unit 101 comprises a sample and/or probe holder 103 in a second controlled atmosphere 400. The pretreatment unit 101 may comprise additional (optional) parts 104, 105 such as for example dedicated equipment for heating 104 the sample or part of the sample and/or the probe, either directly with a heating stage or indirectly by radiation, hereafter also referred to as 'a heater'.

The pretreatment unit 101 can be isolated from the outside environment 200, which is typically ambient air environment. Otherwise said the interior of the pretreatment unit 101 may be controlled to have an atmosphere isolated from the outside environment. The pretreatment unit 101, when in use, i.e. when operating in the second controlled atmosphere 400, is isolated from the outside environment (i.e. the environment different from the pretreatment unit environment) such that no contaminants may enter the pretreatment unit 101. The pretreatment unit 101 may for example be sealed.

Wherein there is referred to contaminant, it is meant any of organic and inorganic compounds, water-based compounds, oxidative compounds and dust particles that may deteriorate the quality of the sample and/or AFM probe resulting in a lower quality AFM measurement. For example the presence of a water film on the sample surface may influence the quality of the AFM measurement. Also the presence of a (native) oxide on the surface and/or AFM probe is detrimental for the AFM measurement.

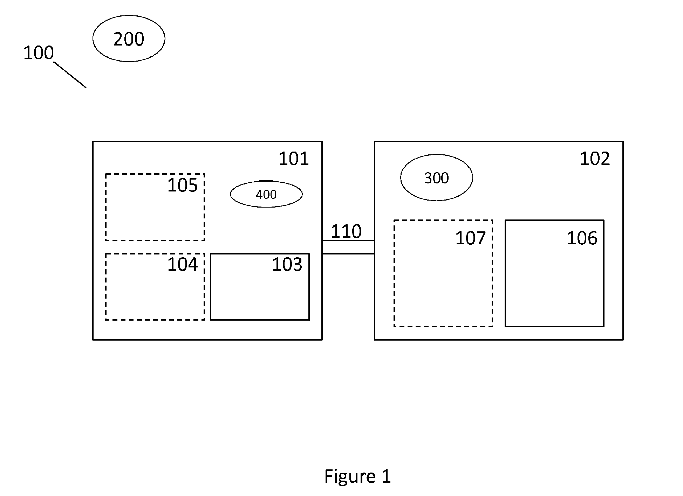

The pretreatment unit 101 may be located outside of the AFM measurement unit 102 as shown schematically in figure 1.

Transfer of the sample and/or AFM probe from the pretreatment unit 101 to the AFM measurement unit 102 must be done without exposing the sample and/or AFM probe to the outside environment 200, i.e. an environment with an atmosphere different from the first and/or second atmosphere, more specifically to air or any other environment which may contaminate the sample and/or AFM probe surface.

The pretreatment unit 101 and the AFM measurement unit 102 may be connected 110 indirectly using a dedicated load lock system or valve system.

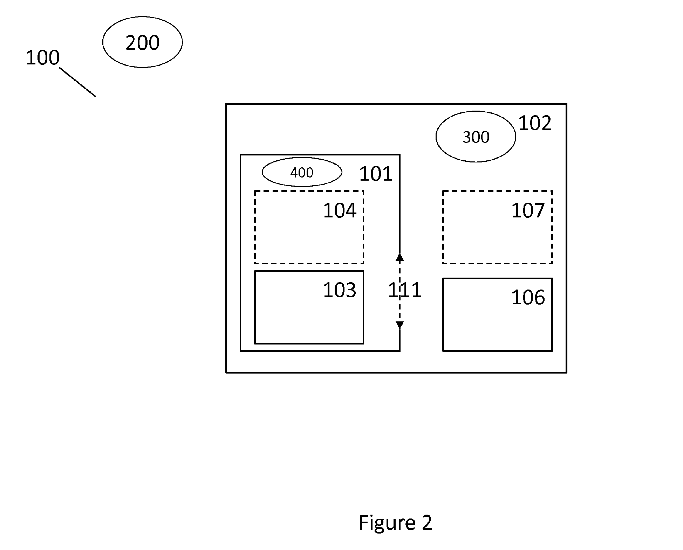

The pretreatment unit 101 may be located within the AFM measurement unit 102 as shown schematically in figure 2. The pretreatment unit 101 may be located close or next to the AFM measurement equipment 106 in the AFM measurement unit 102. With close is meant within a minimal distance to easily transfer the sample and/or AFM probe to and from the AFM measurement equipment 106.

The pretreatment unit 101 may also be directly connected 111 (arrowed dotted line) to the AFM measurement unit 102. For example the pretreatment unit may comprise an opening (which may be closed or opened) through which the sample and/or AFM probe may be transferred directly from the first controlled atmosphere to the second atmosphere or vice versa without any intermediate transport system.

The first controlled atmosphere 300 of the AFM measurement unit 102 is different from the second controlled atmosphere 400 of the pretreatment unit 101.

The first controlled atmosphere 300 of the AFM measurement unit 102 consists of an atmosphere substantially free of any of the abovementioned contaminants. This may be achieved by using an inert or noble gas, such as but not limited to nitrogen, argon, helium, or any mixture thereof.

The second controlled atmosphere 400 of the pretreatment unit 101 is a vacuum atmosphere/environment. With vacuum is meant that the interior of the pretreatment unit is at a pressure which is lower than about 1 mbar (also known as medium vacuum), more particularly lower than about 10⁻³ mbar (also known as high vacuum), even more particularly lower than about 10⁻⁹ mbar (also known as ultra high vacuum).

The pressure of the second controlled atmosphere is preferably lower to the pressure of the first controlled atmosphere. The second controlled atmosphere may be equal to the pressure of the first controlled atmosphere when the sample and/or AFM probe is transferred in between the pretreatment unit and the AFM measurement unit.

The AFM measurement unit 102 may comprise AFM measurement equipment 106 used for performing electrical atomic force microscopy measurement such as for example scanning spreading resistance microscopy (SSRM) measurement.

In another aspect a method 400 is disclosed for performing an atomic force microscopy (AFM) measurement of a sample with an AFM probe. The method 400 comprises performing the AFM measurement 406 of the sample with the AFM probe in an AFM measurement unit operating under a first controlled atmosphere wherein the sample and/or the AFM probe is treated 410 in a pretreatment unit operating under a second controlled atmosphere prior to performing the AFM measurement 406, and the second controlled atmosphere being different from the first controlled atmosphere.

The step of treating 410 the sample and/or AFM probe in the pretreatment unit under a second controlled atmosphere comprises introducing 401 the sample and/or AFM probe in the pretreatment unit and depressurizing 403 the pretreatment unit to a predetermined pressure, with the sample and/or AFM probe placed in the pretreatment unit. The predetermined pressure is preferably a vacuum pressure. When the predetermined pressure is achieved in the pretreatment unit, the sample and or probe are maintained 407 at the predetermined pressure for a predetermined time.

The step of treating the sample and/or AFM probe 410 under a second controlled atmosphere may further comprise heating 402, 404 the sample and/or AFM probe at a predetermined temperature and for a predetermined heating time directly by a dedicated heating stage or indirectly by radiation.

The step of heating the sample and/or AFM probe in the pretreatment unit may be done before 402, during or after 404 depressurizing the pretreatment unit or before, during or after the step of maintaining the sample and/or AFM probe to the predetermined pressure. Preferably the step of heating the sample and/or AFM probe is performed during the step of depressurizing the pretreatment unit or during the step of maintaining the sample and/or AFM probe to the predetermined pressure.

After the step of maintaining the sample at a predetermined pressure 407, the pretreatment unit may be pressurized again to another atmosphere, preferably the another atmosphere being identical to the first controlled atmosphere. The pressurizing step may be done using a contaminant-free gas, such as for example an inert gas. The inert gas may be selected from nitrogen, argon, helium or a mixture thereof. After the pressurizing step, the interior of the pretreatment unit will be in the another atmosphere, being preferably identical to the first atmosphere. This facilitates the step of transferring the treated sample and/or AFM probe from the pretreatment unit to the AFM measurement unit as both environments have a substantial identical atmosphere and pressure.

The first controlled atmosphere of the AFM measurement unit is different from the second controlled atmosphere of the pretreatment unit.

The first controlled atmosphere of the AFM measurement unit consists of an atmosphere substantially free of any of the abovementioned contaminants. This may be achieved by using an inert or noble gas, such as but not limited to nitrogen, argon, helium, or any mixture thereof.

The second controlled atmosphere of the pretreatment unit is a vacuum atmosphere/environment. With vacuum is meant that the interior of the pretreatment unit is at a pressure which is lower than about 1 mbar (also known as medium vacuum), more particularly lower than about 10⁻³ mbar (also known as high vacuum), even more particularly lower than about 10⁻⁹ mbar (also known as ultra high vacuum).

The predetermined pressure is a vacuum pressure at least lower than about 1 mbar.

The duration of the treatment step of the sample and/or AFM probe under a second controlled atmosphere may be longer than about 5 minutes, more particularly in between about 5 minutes and 3 hours. The duration of the process of performing a treatment of the sample and/or AFM probe under a second controlled atmosphere may vary depending on the predetermined pressure, predetermined time and predetermined temperature. For example, depending of the predetermined pressure (vacuum) for the pretreatment unit, the duration of the treatment step may vary. The lower the vacuum needed in the pretreatment unit, the longer the duration of the treatment step may be.

The sample and/or AFM probe are thus pretreated 410 in a vacuum atmosphere prior to performing the AFM measurement 406. By putting the sample and/or AFM probe under a vacuum atmosphere, contaminants present on the surface of the sample and/or AFM probe such as organic contaminants, the presence of a water film and/or the presence of (native) oxides are eliminated and any surface modifications of the sample and/or AFM probe induced by ambient air and its contaminants can be avoided. After the vacuum pretreatment 410 of the sample and/or AFM probe, the sample and/or AFM probe surface are thus substantially free of any contaminants and modifications which may influence the subsequent atomic force microscopy measurement 406.

Additionally, the sample and/or the probe (or parts of it) may also be heated before, during, or after the abovementioned pretreatment procedure to further improve the surface and/or tip quality ultimately leading to higher quality AFM measurements.

After performing a treatment 410 of the sample, and/or AFM probe the atomic force microscopy measurement 406 is performed. In between these two steps, the treated sample and/or AFM probe is transferred 405 from the second controlled atmosphere to the first controlled atmosphere. This is done without exposing the sample and/or AFM probe to air or any other contaminant or any other atmosphere different from the first or the second atmosphere.

After the AFM measurement step 406, step 410 of treating the sample and/or AFM probe may be repeated again. Therefore the measured sample and/or used probe should be transferred from the first to the second controlled atmosphere.

A possible example of configuration of the apparatus according to certain embodiments may be as follows. The pretreatment unit may be a box which can be pumped using vacuum pumps to a (ultrahigh/high/medium) vacuum environment and may also allow for heating (part of) the sample and/or the probe. The pretreatment unit may comprise a heating system. The pretreatment unit may be connected to the AFM measurement unit; either directly or indirectly , for example by a load lock system, such that the pretreated sample or probe (i.e. the sample or probe which underwent a pretreatment in the pretreatment unit) may be transferred easily to the AFM measurement unit without being exposed to air or any other contaminant. The pretreatment unit may also be located inside the AFM measurement unit. Using for example a glove box, the pretreated sample and/or AFM probe may be transferred from the pretreatment unit to the stage or sample holder and/or AFM probe holder of the AFM measurement unit without exposing the sample or probe to air or any other contaminant.

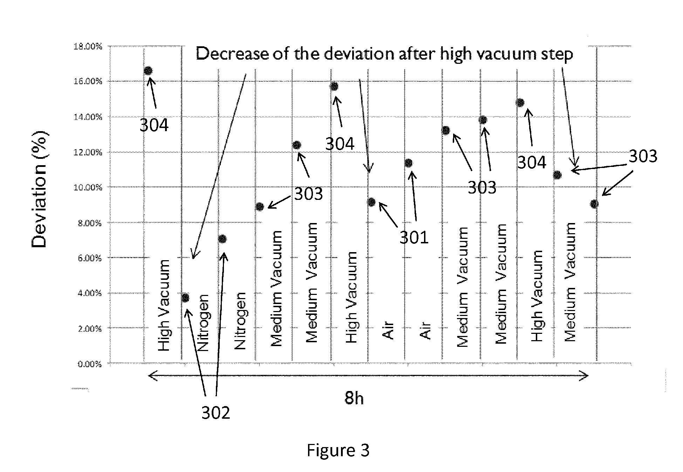

In Figure 3, the proof-of-concept is illustrated for certain embodiments. The deviation (%) is shown as a function of time. Deviation is defined as the average relative difference between individual AFM measurements obtained on several single scans and the mean of those individual AFM measurements scans. During a time period of 8 hours a sample was exposed in different cycles to various environments: 'air' 301 refers to regular ambient air as present in the lab at ambient pressure, while 'nitrogen' 302 refers to a pure nitrogen (industrial grade) atmosphere at ambient pressure. 'Medium vacuum' 303 represents a typical pressure of about 10⁻² mbar and can be reached with a regular roughing pump. 'High vacuum' 304 is reached when the pressure on the sample is below about 10⁻⁴ mbar and can be reached with a turbo pump. The various environments 301, 302, 303, 304 are indicated in the graph and the AFM measurements are performed in the corresponding atmosphere.

The sample is thus first pretreated in a second atmosphere, in this case a vacuum atmosphere. In this example, the sample was first exposed to high vacuum and subsequently measured in a first atmosphere (nitrogen). Clearly, the deviation drops significantly. Thereafter, the sample is exposed for a longer time to the second atmosphere (nitrogen) and the AFM measurements show an increase of the deviation. Subsequent exposure of the sample to another atmosphere (medium vacuum) reveals a further increase of the deviation. Only the subsequent exposure to a high vacuum atmosphere results in a decrease of the deviation. The procedure was repeated for a different nature of the atmosphere (air instead of nitrogen) revealing similar behavior. This experiment proves that the prior exposure to a high vacuum atmosphere results in a significantly lower deviation and thus leads to higher quality AFM measurements even though the atmosphere in the measurement unit is not high vacuum.

## Claims

1. An apparatus for performing atomic force microscopy, the apparatus comprising:
- an AFM measurement unit operating in a first controlled atmosphere;
- a pretreatment unit operating in a second controlled atmosphere being the different from the first controlled atmosphere, the pretreatment unit being connected to the AFM measurement unit.

2. The apparatus according to claim 1, wherein the first controlled atmosphere consists of at least one inert gas.

3. The apparatus according to claim 2, wherein the inert gas is selected from nitrogen, argon and helium or a mixture thereof.

4. The apparatus according to any of claims 1 to 3, wherein the second controlled atmosphere is a vacuum atmosphere.

5. The apparatus according to claim 4, wherein the vacuum atmosphere has a pressure lower than 1 mbar.

6. The apparatus according to any of claims 1 to 5, wherein the pretreatment unit is located within the AFM measurement unit.

7. The apparatus according to any of claims 1 to 6, wherein the AFM measurement unit comprises AFM measurement equipment for performing electrical measurements.

8. The apparatus according to any of claims 1 to 7, wherein the pretreatment unit comprises a holder for holding a sample and/or AFM probe.

9. The apparatus according to any of claims 1 to 8, wherein the pretreatment unit further comprises a heating system.

10. A method for performing an AFM measurement of a sample with an AFM probe, the method comprising:
performing the AFM measurement of the sample with the AFM probe in an AFM measurement unit operating under a first controlled atmosphere,
wherein prior to the AFM measurement
- (i) the sample and/or the AFM probe is treated in a pretreatment unit , the pretreatment unit operating under a second controlled atmosphere during the treatment step, the second controlled atmosphere being different from the first controlled atmosphere; and
- (ii) the treated sample and/or AFM probe is transferred from the pretreatment unit to the AFM measurement unit.

11. A method for performing an AFM measurement of a sample with an AFM probe according to claim 10, wherein the second controlled atmosphere is vacuum and the treatment in the pretreatment unit comprises:
- introducing the sample and/or AFM probe in the pretreatment unit, thereafter
- depressurizing the pretreatment unit, with the sample and/or AFM probe therein, to a predetermined vacuum pressure.
- maintaining the sample at the predetermined vacuum pressure for a predetermined time.

12. A method for performing an AFM measurement of a sample with an AFM probe according to claim 11, the method further comprising:
- after the step of maintaining the sample at the predetermined vacuum pressure, pressurizing the pretreatment unit with a contaminant-free gas to an atmosphere which is identical to the first controlled atmosphere.

13. A method for performing an AFM measurement of a sample with an AFM probe according to any of claims 10 to 12, wherein the treatment in the pretreatment unit further comprises heating the sample and/or AFM probe to a predetermined temperature after introducing the sample and/or AFM probe in the pretreatment unit and before, during or after the depressurizing step.

14. A method for performing an AFM measurement of a sample with an AFM probe according to any of claims 10 to 13, wherein
- after performing the AFM measurement of the sample with the AFM probe the sample and/or AFM probe is transferred from the AFM measurement unit to the pretreatment unit; and
- steps (i) to (ii) are repeated.
